(19) Europäisches Patentamt
European Patent Office
Office européen des brevets

(11) **EP 4 711 435 A1**

(12) **EUROPEAN PATENT APPLICATION**
published in accordance with Art. 153(4) EPC

(43) Date of publication:
**18.03.2026 Bulletin 2026/12**

(21) Application number: **24803762.4**

(22) Date of filing: **10.05.2024**

(51) International Patent Classification (IPC):
**C09K 17/32** (2006.01)    **C09K 17/50** (2006.01)
**C09K 101/00** (2006.01)

(52) Cooperative Patent Classification (CPC):
**C09K 17/32; C09K 17/50;** C09K 2101/00

(86) International application number:
**PCT/KR2024/006313**

(87) International publication number:
**WO 2024/232709 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023 KR 20230060503
10.05.2023 KR 20230060507**

(71) Applicant: **LOTTE Fine Chemical Co., Ltd.
Nam-gu, Ulsan 44714 (KR)**

(72) Inventors:
• KIM, Dooho
  Ulsan 44714 (KR)
• JEON, Gyujong
  Ulsan 44714 (KR)
• KANG, Gyungdon
  Ulsan 44714 (KR)
• MO, Younghyun
  Ulsan 44714 (KR)

(74) Representative: **Michalski Hüttermann & Partner
Patentanwälte mbB
Kaistraße 16A
40221 Düsseldorf (DE)**

(54) **ECO-FRIENDLY SOIL CONDITIONER AND METHOD FOR MANUFACTURING SAME**

(57) The present invention relates to an eco-friendly soil conditioner and a method for manufacturing same and, more specifically, to: an eco-friendly soil conditioner which increases moisture retention ability in soil and, at the same time, enables soil aggregation, pH control, nutrient supply, incorporation of microorganisms, and the like, thereby being capable of creating optimal vegetation conditions and also increasing bio-carbon content through biodegradation, thus being able to reduce global warming; and a method for manufacturing same.

Fig.1

## Description

### Technical Field

The present disclosure relates generally to a soil conditioner and a method for manufacturing the same. More particularly, the present disclosure relates to an eco-friendly soil conditioner, which is added to natural or artificial soil to enhance the moisture retention ability of soil and, as it biodegrades, increases bio-carbon content, thereby contributing to the mitigation of global warming, and to a method for manufacturing the same.

### Background Art

Soil conditioners generally refer to substances used to improve physical, chemical, and/or biological properties of impaired soils. These impaired soils, resulting from both natural factors and human activities, negatively impact plant growth and crop quality and safety.

Examples of impaired soils include sandy soil, clay soil, structural obstacle soil, acid soil, saline soil, alkaline soil, contaminated soil, and the like. These types of soils are characterized by lack of vegetation, poor physical structure, limited root growth, low fertility, and nutrient deficiencies (such as imbalance, acidification, salinity, excessive or insufficient soil moisture, and the presence of toxic substances).

In particular, sandy soils are predominantly found in arid regions and in areas undergoing desertification. In arid regions, soils are prone to erosion from wind or heavy rainfall, leading to low survival rates of afforested trees. Because of its inherent characteristics, sandy soils struggle to retain water as they are easily washed away with the water that drains through them. As a result, the roots of plants such as trees or grass cannot access sufficient moisture or nutrients, making it challenging to establish forests or grasslands.

To retain soil moisture to prevent desertification in such arid regions, attempts have been made to improve soil by adding hygroscopic polymers, such as polyacrylic acid (ASAP; acrylic sodium salt polymer) or polyacrylamide (Patent Document 0001, Patent Document 0002). However, organic matter including fertilizers has limited ability to retain or improve soil moisture. In particular, polyacrylamide is classified as a Group 2 carcinogen and poses health risks, while petroleum-based acrylates are major contributors to greenhouse gas emissions and therefore should no longer be used in order to prevent environmental pollution.

Meanwhile, mineral salts such as magnesium chloride ($MgCl_2$) can help retain moisture in soil. However, in sandy soils in particular, they are readily dissolved by rain, quickly leached from the soil, and flow into rivers and other water bodies where they negatively affect aquatic ecosystems due to increased salinity levels. Additionally, the use of excessive mineral salts can lead to environmental problems such as soil acidification and plant death.

Moreover, hygroscopic polymers are slow to decompose in soil, and the polymers and/or their degradation products in soil may act as toxic substances in soil ecosystems, causing environmental pollution issues.

Therefore, for the improvement of impaired soils to prevent desertification in arid regions, there is a need for a soil conditioner that does not primarily rely on mineral salts or polymers that cause soil toxicity, but can retain or enhance soil moisture, mitigate leaching of fertilizer components, and improve fertilizer efficiency, thereby increasing plant survival and yield during afforestation, pasture establishment, or agricultural activities in arid environments.

[Documents of Related Art]

[Patent Documents]

(Patent Document 1) Korean Patent No. 10-1264829 (publication date: January 23, 2013)
(Patent Document 2) Korean Patent No. 10-2479792 (publication date: April 20, 2022)

### Disclosure

### Technical Problem

Accordingly, the present disclosure has been made keeping in mind the above problems occurring in the related art, and an objective of the present disclosure is to provide an eco-friendly soil conditioner, which enhances the moisture retention ability of soil and increases bio-carbon content as it biodegrades, thereby contributing to the mitigation of global warming, and to a method for manufacturing the same.

## Technical Solution

In order to accomplish the above objective, one embodiment of the present disclosure provides an eco-friendly soil conditioner, including: a thermoplastic resin containing 65 wt% to 80 wt% of hydroxyethyl cellulose and 20 wt% to 35 wt% of glycerin.

In the preferred embodiment of the present disclosure, the eco-friendly soil conditioner may further include: 5 to 60 parts by weight of a porous inorganic material based on 100 parts by weight of the thermoplastic resin; or 5 to 40 parts by weight of a crosslinking agent based on 100 parts by weight of the thermoplastic resin.

In the preferred embodiment of the present disclosure, the porous inorganic material may be at least one selected from the group consisting of perlite, vermiculite, bentonite, and zeolite.

In the preferred embodiment of the present disclosure, the crosslinking agent may be at least one selected from the group consisting of citric acid, polyethylene glycol, and hexanediol.

In the preferred embodiment of the present disclosure, the hydroxyethyl cellulose may have a viscosity of 10 cps to 250,000 cps, as measured at a temperature of 20°C using a Brookfield viscometer for an aqueous solution in which 2 wt% of hydroxyethyl cellulose is dissolved in water.

Another embodiment of the present disclosure provides a method for manufacturing an eco-friendly soil conditioner, the method including the steps of: (a) adding 20 wt% to 35 wt% of glycerin to 65 wt% to 80 wt% of hydroxyethyl cellulose to obtain a mixture; (b) subjecting the obtained mixture to kneading for plasticization to obtain a thermoplastic resin; and (c) subjecting the obtained thermoplastic resin to granulation.

In the preferred embodiment of the present disclosure, the method may further include: further adding a porous inorganic material and/or a crosslinking agent to step (a) or step (c), wherein the porous inorganic material may be added in an amount of 5 to 60 parts by weight based on 100 parts by weight of the mixture of step (a) or 100 parts by weight of the thermoplastic resin of step (c), and the crosslinking agent may be added in an amount of 5 to 40 parts by weight based on 100 parts by weight of the mixture of step (a) or 100 parts by weight of the thermoplastic resin of step (c).

In the preferred embodiment of the present disclosure, the porous inorganic material may be at least one selected from the group consisting of perlite, vermiculite, bentonite, and zeolite.

In the preferred embodiment of the present disclosure, the crosslinking agent may be at least one selected from the group consisting of citric acid, polyethylene glycol, and hexanediol.

In the preferred embodiment of the present disclosure, the hydroxyethyl cellulose may have a viscosity of 10 cps to 250,000 cps, as measured at a temperature of 20°C using a Brookfield viscometer for an aqueous solution in which 2 wt% of hydroxyethyl cellulose is dissolved in water.

In the preferred embodiment of the present disclosure, the kneading in step (b) may be performed at a temperature of 50°C to 90°C at a speed of equal to or greater than 300 rpm.

In the preferred embodiment of the present disclosure, the granulation in step (c) may be performed by compression-molding the thermoplastic resin into a granular or pellet form.

## Advantageous Effects

An eco-friendly soil conditioner according to the present disclosure can enhance the moisture retention ability of soil, thereby improving drought resistance and dry growing conditions for crops, and, at the same time, increase bio-carbon content by utilizing biodegradable raw materials, thus contributing to the mitigation of global warming.

Additionally, the eco-friendly soil conditioner according to the present disclosure exhibits excellent molding processability, and offers an easily controllable particle size, enabling its use for large-scale or mechanical application. This simplifies the application process of the soil conditioner, making it efficient in terms of reducing labor time and application costs, while its excellent absorbency and durability allow it to maintain stable performance over an extended period.

## Description of Drawings

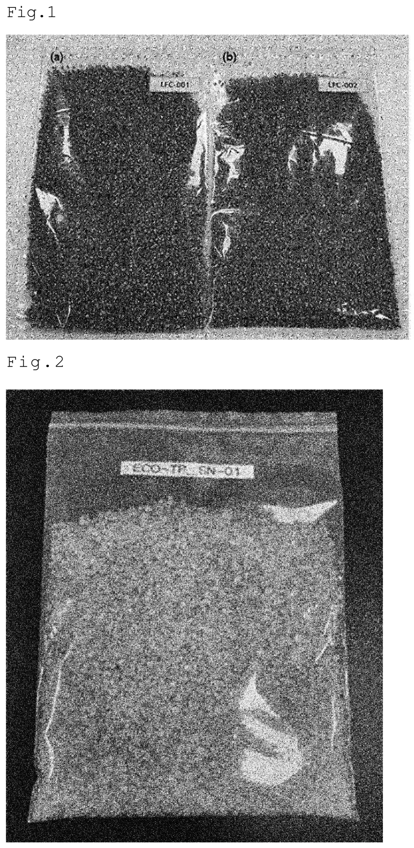

FIGS. 1 (a) and (b) are images of soil conditioners manufactured in Experimental Examples 1-3 and 1-4 of the present disclosure, taken with a digital camera.
FIG. 2 is an image of a soil conditioner manufactured in Experimental Example 2-3 of the present disclosure, taken with a digital camera.

**Mode for Invention**

Advantages and features of the present disclosure, and implementation methods thereof will be clarified through following embodiments described with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Further, the present disclosure is only defined by scopes of claims.

In the following description of the disclosure, detailed description of known functions and configurations incorporated herein may be omitted when it may make the subject matter of the disclosure rather unclear.

The terms such as "comprising", "including", "having", and "composed of" used herein are generally intended to allow other components to be added unless the terms are used with the term "only". Any references to singular may include plural unless expressly stated otherwise.

Features of various experimental examples of the present disclosure may be partially or overall coupled to or combined with each other, and may be variously inter-operated with each other and driven technically as those skilled in the art can sufficiently understand. The embodiments of the present disclosure may be carried out independently from each other, or may be carried out together in a co-dependent relationship.

In one aspect, the present disclosure relates to an eco-friendly soil conditioner being characterized by including a thermoplastic resin containing 65 wt% to 80 wt% of hydroxyethyl cellulose and 20 wt% to 35 wt% of glycerin.

In general, cellulose derivatives possess water retention, salt resistance, pH stability, and are also biodegradable, and thus have recently been developed for use in various soil conditioners. However, their strong hydrogen bonds cause them to degrade thermally before reaching a melting point, making it difficult to mix them with other components such as inorganic materials, crosslinking agents, and additives. Additionally, their high molecular structure makes them difficult to process and mold, thereby limiting use as soil conditioners.

Accordingly, the present disclosure provides an eco-friendly soil conditioner in which a thermoplastic resin is obtained by adding a predetermined amount of glycerin to hydroxyethyl cellulose having a specific viscosity among cellulose derivatives, and the obtained resin is granulated by further adding a porous inorganic material and/or a crosslinking agent to the resin, thereby enabling both excellent molding processability and improved mechanical properties. As a result, the soil conditioner can stably enhance the moisture retention ability of soil while also facilitating soil aggregation, pH control, nutrient supply, and incorporation of microorganisms. Additionally, it can increase bio-carbon content as it biodegrades, while offering an easily controllable particle size which is advantageous for large-scale application using machines such as drones or tractors. Furthermore, the soil conditioner is biodegradable through the use of plant- and nature-based materials.

To avoid redundancy, the description of each component will be provided in the subsequent section describing a method for manufacturing the eco-friendly soil conditioner.

In another aspect, the present disclosure relates to a method for manufacturing an eco-friendly soil conditioner, the method being characterized by including the steps of: (a) adding 20 wt% to 35 wt% of glycerin to 65 wt% to 80 wt% of hydroxyethyl cellulose to obtain a mixture; (b) subjecting the obtained mixture to kneading for plasticization to obtain a thermoplastic resin; and (c) subjecting the obtained thermoplastic resin to granulation.

The method for manufacturing the eco-friendly soil conditioner according to the present disclosure begins by adding glycerin to hydroxyethyl cellulose to obtain a mixture [step (a)].

The hydroxyethyl cellulose (HEC) is a water-soluble polymer in the form of a white or light yellowish white powder. It is known for its exceptional salt resistance and pH stability among cellulose derivatives, and its colloidal, water-retention, and temperature-resistant properties, which make it a versatile raw material for various products across a wide range of industrial fields.

In the present disclosure, the hydroxyethyl cellulose serving as a base resin may have a viscosity of equal to or greater than 10 cps, preferably 10 cps to 250,000 cps, and more preferably 100 cps to 250,000 cps. In this case, the viscosity of the hydroxyethyl cellulose refers to the viscosity obtained by measuring an aqueous solution in which 2 wt% of hydroxyethyl cellulose is dissolved in water at a temperature of 20°C using a Brookfield viscometer.

When the viscosity of the hydroxyethyl cellulose is less than 10 cps, the amount of glycerin mixed therein, which will be described later, increases, which may cause the mixture to become sticky after extrusion, resulting in molding failure in the manufacture of thermoplastic resin chips.

Additionally, the hydroxyethyl cellulose may be mixed in an amount of 65 wt% to 80 wt% based on the total weight of the mixture of hydroxyethyl cellulose and glycerin. When the amount of the hydroxyethyl cellulose is less than 65 wt%, an excessive amount of glycerin makes the mixture sticky and making the granulation process challenging. After plasticization, the mixture may form lumps that are difficult to feed into a device such as an extruder. Whereas, when it exceeds 80 wt%, plasticization by glycerin may not proceed sufficiently, making the mixture too rigid to form a thermoplastic resin.

The hydroxyethyl cellulose may be used either as a commercially available product or as a product prepared in-house. The method for preparing the hydroxyethyl cellulose is not particularly limited as long as it is a method known in the art. Preferably, the hydroxyethyl cellulose is prepared by reacting cellulose with an alkalizing agent to obtain alkalized cellulose, followed by subjecting the obtained alkalized cellulose to an etherification reaction.

Meanwhile, glycerin is obtainable as a by-product of soap or fatty acid production from natural resins, but has recently been synthesized by treating propylene with chlorine to form epichlorohydrin, which is then hydrolyzed. It is widely used across various industrial fields, including rubber, toothpaste, cosmetics, chemicals, paints, cellophane, printing inks, and confectionery.

In the present disclosure, the glycerin is mixed in hydroxyethyl cellulose, serving to interfere with strong hydrogen bonding formed by the hydroxyl groups of the hydroxyethyl cellulose and to widen the distance between cellulose polymer chains, thereby creating an environment prone to micro-Brownian motion. The glycerin may be added in an amount of 20 wt% to 35 wt% based on the total weight of the mixture of hydroxyethyl cellulose and glycerin.

When the amount of the glycerin is less than 20 wt% of the total weight of the mixture of hydroxyethyl cellulose and glycerin, the effect of interfering with the strong hydrogen bonding formed by the hydroxyl groups of the hydroxyethyl cellulose and widening the distance between cellulose polymer chains to create the micro-Brownian motion-prone environment is insufficient, leading to a higher glass transition temperature and a failure to impart flexibility to the resin. Whereas, when it exceeds 35 wt%, an excessive amount of glycerin may leach out, making the mixture sticky and making the granulation process, such as pelletizing, challenging.

Subsequently, the mixture in which glycerin is mixed in hydroxyethyl cellulose is subjected to kneading for plasticization to obtain a thermoplastic resin [step (b)].

The kneading of the mixture may be performed at a temperature of 50°C to 90°C at a speed of equal to or greater than 300 rpm, preferably at a temperature of 70°C to 90°C at a speed of 300 rpm to 600 rpm, to facilitate the plasticization of hydroxyethyl cellulose. The kneading time may be appropriately adjusted depending on the amount of the mixture or the degree of plasticization, but is preferably 30 to 60 minutes.

When the kneading is performed under the conditions described above, the glass transition temperature and melting point of hydroxyethyl cellulose may be lowered, thereby facilitating micro-Brownian motion and improving the plasticization efficiency of hydroxyethyl cellulose even with the use of a small amount of glycerin.

The kneading may be performed by any suitable methods, but may be performed independently using a kneader or in conjunction with an extrusion step to be described later using an extruder. In this case, the kneader is not particularly limited, and any kneaders commonly used in the art may be employed without restriction. Examples thereof include a high-speed stirrer, a mixer, a blender, and the like.

Additionally, the method may further include further adding an additive as needed before and/or after the kneading (plasticizing) step.

The additive may be at least one selected from the group consisting of an antioxidant, a lubricant, a biodegradation accelerator, and a strength reinforcing agent. The additive may be any components commonly used in the art, and the selection of the additive in the present disclosure is not particularly limited.

Specifically, among the aforementioned additives, the antioxidant serves to prevent thermal degradation of hydroxyethyl cellulose during thermoplasticization and molding, and may be any antioxidants commonly used in the art. Examples thereof include tetrakismethylene (3,5-di-t-butyl-4-hydroxyhydrocinnamate) methane, tris (2,4-di-t-butylphenyl) phosphate, and the like, either alone or in a mixture thereof.

Additionally, the lubricant serves to improve the lubricating properties of the thermoplastic resin. Any lubricants commonly used in the art may be employed without limitation. In terms of lubricity and miscibility with the thermoplastic resin of the present disclosure, the lubricant is preferably at least one selected from the group consisting of sorbitol, magnesium stearate, calcium stearate, ethylene glycol, glycerol monostearate, and lecithin.

Additionally, as the biodegradation accelerator and strength reinforcing agent, any biodegradation accelerators and strength reinforcing agents capable of accelerating the biodegradation of the thermoplastic resin or reinforcing its strength may be employed without limitation. Examples of the biodegradation accelerator include vegetable oils such as soybean oil, castor oil, flaxseed oil, sunflower oil, and coconut oil; fatty acids such as caproic acid, capric acid, lauric acid, oleic acid, olenic acid, and linoleic acid; and fatty acid esters such as ethyl oleate, ethyl linoleate, and isooctylate, either alone or in a mixture of at least two thereof. Examples of the strength reinforcing agent include glass fibers and carbon fibers.

Such additives may be selected without limitation in any amount commonly used within a range that does not impair the desired physical properties of the thermoplastic resin of the present disclosure. Preferably, each additive is independently added in an amount of 0.01 to 10 parts by weight based on 100 parts by weight of the thermoplastic resin of the present disclosure.

The method may further include extrusion and cutting steps of the extruding and cutting the kneaded (plasticized) thermoplastic resin, thereby obtaining a productizable form.

The extrusion step may be performed using an extruder. The extruder is not particularly limited, and any extruders commonly used known in the art may be employed without limitation. For example, a single-screw extruder with one screw or a multi-screw extruder with multiple screws may be used. Considering uniform kneading of materials, ease of processing, and economic feasibility, a twin-screw extruder with two screws is preferably used.

In this case, the temperature of the extruder may be 70°C to 200°C, preferably 130°C to 180°C, to ensure efficient extrusion without degradation of the thermoplastic resin. The screw speed of the extruder may be 20 rpm to 300 rpm, preferably 20 rpm to 200 rpm. These extrusion conditions provide appropriate throughput per unit time, ensuring excellent process efficiency and sufficient extrusion, while avoiding problems such as thermal degradation of the resin components.

The resulting extrudate may be cut using a pelletizer into a form that is easy to handle and suitable for manufacturing molded products, preferably in granular or pellet form.

Additionally, in the step of obtaining the thermoplastic resin, it is effective to include a cooling step using a cooling water bath between the extrusion and cutting steps. After the cutting step, a drying step is preferably performed at a temperature of 50°C to 80°C for 4 to 8 hours.

The thermoplastic resin obtained in such a manner may have, for example, a tensile strength of 4.5 Mpa to 6.5 MPa as measured according to ASTM D638, an elongation of 20 mm to 45 mm, indicating that the thermoplastic resin has excellent mechanical properties and molding processability, as well as biodegradability.

Subsequently, the obtained thermoplastic resin is subjected to granulation to manufacture a soil conditioner [step (c)].

The granulation may include extrusion and cutting steps of extruding and cutting the aforementioned mixture, thereby obtaining a productizable form.

The extrusion step may be performed using an extruder. The extruder is not particularly limited, and any extruders commonly used in the art may be employed without limitation. For example, a single-screw extruder with one screw or a multi-screw extruder with multiple screws may be used. Considering uniform kneading of materials, ease of processing, and economic feasibility, a twin-screw extruder with two screws is preferably used.

In this case, the temperature of the extruder may be 70°C to 200°C, preferably 130°C to 180°C, to ensure efficient extrusion of the soil conditioner without degradation. The screw speed of the extruder may be 20 rpm to 300 rpm, preferably 20 rpm to 200 rpm. These extrusion conditions provide appropriate throughput per unit time, ensuring excellent process efficiency and sufficient extrusion, while avoiding problems such as thermal degradation of the resin components.

The resulting extrudate may be cut using a pelletizer into a form that is easy to handle and suitable for manufacturing molded products, preferably in granular or pellet form.

Additionally, in the manufacture of the soil conditioner according to the present disclosure, it is also effective to further include a cooling step using air cooling between the extrusion and cutting steps. After the cutting step, a drying step is preferably performed at a temperature of 50°C to 80°C for 4 to 8 hours.

The soil conditioner manufactured in such a manner may have an average diameter of 1 mm to 7 mm, specifically 2 mm to 5 mm. The soil conditioner having an average diameter within the above range is easy to apply to soil, and upon contact with water, it has a large surface area per unit weight, which improves its moisture absorption capacity.

Meanwhile, the method for manufacturing the eco-friendly soil conditioner according to the present disclosure may further include further adding a porous inorganic material and/or a crosslinking agent to the mixture of hydroxyethyl cellulose and glycerin in step (a) or the thermoplastic resin in step (c) in which the mixture of ethyl cellulose and glycerin is plasticized, thereby manufacturing an eco-friendly soil conditioner.

In this case, the porous inorganic material serves to assist in the absorption and release of moisture, and may be added in an amount of 5 to 60 parts by weight, preferably 10 to 50 parts by weight, based on 100 parts by weight of the mixture of step (a) or the thermoplastic resin of step (c). When the amount of the porous inorganic material is less than 5 parts by weight based on 100 parts by weight of the mixture of step (a) or the thermoplastic resin of step (c), the moisture migration path may be blocked, causing problems in the absorption and release of moisture. Whereas, when the amount exceeds 60 parts by weight, the sustainability of moisture release may deteriorate, and excessive addition of the porous inorganic material may also cause problems in moldability after extrusion.

The porous inorganic material is not particularly limited as long as it is an inorganic material having porosity, and may specifically be at least one selected from the group consisting of perlite, vermiculite, bentonite, and zeolite, and more specifically, may be perlite.

Additionally, the crosslinking agent is added to the mixture of step (a) or the thermoplastic resin of step (c), serving to lower the extrusion temperature and increase flowability, to minimize deterioration of physical properties even upon moisture absorption, and to enhance moisture absorption capacity. The crosslinking agent may be added in an amount of 5 to 40 parts by weight, preferably 10 to 40 parts by weight, based on 100 parts by weight of the mixture of step (a) or the thermoplastic resin of step (c). When the amount of the crosslinking agent is less than 5 parts by weight, problems of reduced moisture absorption capacity and absorption rate may occur. Whereas, when the amount exceeds 40 parts by weight, an excessive amount of crosslinking agent may cause problems in strand formation during extrusion.

The crosslinking agent is not particularly limited as long as it can crosslink the thermoplastic resin, and may be at least one selected from the group consisting of citric acid, polyethylene glycol, and hexanediol, and more specifically, may be citric acid. The citric acid is a natural, non-toxic substance, and is more favorable for biodegradation compared to other substances.

The soil conditioner manufactured according to the present disclosure is biodegradable and exhibits excellent molding proccessability and mechanical properties. It can not only stably enhance the moisture retention ability of soil but also facilitate soil aggregation, pH control, nutrient supply, and incorporation of microorganisms, thereby creating optimal vegetation conditions. Furthermore, it can increase bio-carbon content as it biodegrades.

In describing the soil conditioner of the present disclosure and the method for manufacturing the same, it should be noted that any other conditions or equipment not explicitly described herein may be appropriately selected within the range commonly practiced in the art without particular limitation.

Hereinafter, the present disclosure will be described in more detail with reference to the following experimental examples. However, these examples are provided for illustrative purposes only and should not be construed as limiting the scope and spirit of the present disclosure.

**<Experimental Example 1-1>**

To 77 g of hydroxyethyl cellulose (HEC B100K, Lotte Fine Chemical) having a viscosity of 100,000 cps, 23 g of glycerin was added. The resulting mixture was subjected to high-speed mixing at a speed of 300 rpm for 30 minutes for plasticization, and then extruded using a twin-screw extruder with a screw speed of 30 rpm [main motor speed: 200 rpm to 250 rpm] at an average extruder temperature of 150°C to obtain a thermoplastic resin. Perlite was added to the obtained thermoplastic resin in the amount specified in Table 1, followed by mixing for 20 minutes. The resulting mixture was then extruded again using a twin-screw extruder at a screw speed of 30 rpm (main motor speed: 200 rpm to 250 rpm) at an average extruder temperature of 150°C to manufacture a soil conditioner in strand form (3 mm × 3 mm).

**<Experimental Examples 1-2 to 1-14>**

Soil conditioners in strand form were manufactured in the same manner as in Experimental Example 1-1, except for varying the conditions as set forth in Table 1 below.

**<Experimental Example 1-15>**

To 74 g of hydroxyethyl cellulose (HEC H200K, Lotte Fine Chemical) having a viscosity of 200,000 cps, 26 g of glycerin was added to obtain a mixture. 10 g of perlite was added therein, followed by high-speed mixing at a speed of 300 rpm for 30 minutes for plasticization. After plasticization, the resulting mixture was extruded using a twin-screw extruder with a screw speed of 30 rpm [main motor speed: 200 rpm to 250 rpm] at an average extruder temperature of 150°C to manufacture a soil conditioner in strand form (3 mm × 3 mm).

**<Experimental Example 1-16>**

A soil conditioner in strand form was manufactured in the same manner as in Experimental Example 1-15, except for varying the conditions as set forth in Table 1 below.

**<Experimental Examples 1-17 to 1-27>**

Soil conditioners in strand form were manufactured in the same manner as in Experimental Example 1-1, except for varying the conditions as set forth in Table 1 below.

**<Experimental Example 1-28>**

To 100 g of hydroxyethyl cellulose (HEC B100K, Lotte Fine Chemical) having a viscosity of 100,000 cps, 10 g of perlite was added, followed by mixing for 20 minutes. The resulting mixture was then extruded using a twin-screw extruder with a screw speed of 30 rpm [main motor speed: 200 rpm to 250 rpm] at an average extruder temperature of 150°C to manufacture a soil conditioner in strand form (3 mm × 3 mm).

**[Measurement of Moldability, Moisture Absorption Capacity, and Moisture Release Capacity of Soil Conditioner]**

The properties of the soil conditioners manufactured in Experimental Examples 1-1 to 1-28 were measured by the following methods, and the results are shown in Table 1 below.

Measurement Methods

(1) Measurement of moldability: The flowability during discharge was visually evaluated immediately after discharging the extrudate. The moldability was evaluated as "good" when the extrudate was in good condition while facilitating the extrusion, or was evaluated as "poor" when the extrusion failed. The results are shown in Table 1.

(2) Measurement of moisture absorption capacity: 100 g of the soil conditioner specimens manufactured in the experimental examples were each placed in a plastic container and mixed with 1,500 mL of water. After 60 minutes, the amount of moisture absorbed by the soil conditioner was calculated using Equation 1. The results are shown in Table 1.

Moisture absorption capacity (g) = Weight of soil conditioner after moisture absorption (g) - [Weight of soil conditioner before moisture absorption (g) + Weight of plastic container (g)].....(1)     (1)

(3) Measurement of moisture release capacity: After moisture absorption, the soil conditioners were each allowed to stand under conditions: a temperature of 20°C, a relative humidity of 60%, and a duration of 180 hours (7 days). The amount of moisture released was measured using a balance at 12-hour intervals and then calculated using Equation 2. The results are shown in Table 1.

Moisture release capacity (g/h) = [Weight of soil conditioner after moisture absorption (g) - Weight of soil conditioner after moisture release (g)]/144 (h)..... (2)     (2)

Table 1

| Classification | Thermoplastic resin | | | | | Porous inorganic material | | Moldability | Moisture absorption capacity (g) | Average moisture release capacity (g/h) |
|---|---|---|---|---|---|---|---|---|---|---|
| | Cellulose derivative | | | Glycerin | | Type | Content (g) | | | |
| | Type (Product) | Viscosity (cps) | Content (g) | Type | Content (g) | | | | | |
| Experimental Example 1-1 | HEC (B100K) | 100,000 | 77 | Glycerin | 23 | Per lite | 5 | Good | 382 | 2.5 |
| Experimental Example 1-2 | HEC (B100K) | 100,000 | 77 | Glycerin | 23 | Per lite | 7 | Good | 385 | 2.5 |
| Experimental Example 1-3 | HEC (B100K) | 100,000 | 77 | Glycerin | 23 | Per lite | 10 | Good | 441 | 2.8 |
| Experimental Example 1-4 | HEC (B100K) | 100,000 | 77 | Glycerin | 23 | Per lite | 50 | Good | 341 | 2.2 |
| Experimental Example 1-5 | HEC (B100K) | 100,000 | 80 | Glycerin | 20 | Per lite | 10 | Good | 383 | 2.6 |
| Experimental Example 1-6 | HEC (B100K) | 100,000 | 74 | Glycerin | 26 | Per lite | 10 | Good | 356 | 2.3 |
| Experimental Example 1-7 | HEC (B100K) | 100,000 | 70 | Glycerin | 30 | Per lite | 10 | Good | 326 | 2.2 |

(continued)

| Classification | Thermoplastic resin | | | | | Porous inorganic material | | Moldability | Moisture absorption capacity (g) | Average moisture release capacity (g/h) |
|---|---|---|---|---|---|---|---|---|---|---|
| | Cellulose derivative | | | Glycerin | | Type | Content (g) | | | |
| | Type (Product) | Viscosity (cps) | Content (g) | Type | Content (g) | | | | | |
| Experimental Example 1-8 | HEC (B100K) | 100,000 | 65 | Glycerin | 35 | Per lite | 10 | Good | 338 | 2.3 |
| Experimental Example 1-9 | HEC (HM500) | 4,000 | 77 | Glycerin | 23 | Per lite | 10 | Good | 250 | 1.7 |
| Experimental Example 1-10 | HEC (B4K) | 4,000 | 74 | Glycerin | 26 | Per lite | 10 | Good | 386 | 2.6 |
| Experimental Example 1-11 | HEC (H4K) | 30,000 | 74 | Glycerin | 26 | Per lite | 10 | Good | 302 | 2.0 |
| Experimental Example 1-12 | HEC (B30K) | 30,000 | 74 | Glycerin | 26 | Per lite | 10 | Good | 310 | 2.0 |
| Experimental Example 1-13 | HEC (H200K) | 200,000 | 74 | Glycerin | 26 | Per lite | 10 | Good | 298 | 2.0 |
| Experimental Example 1-14 | HEC (H300) | 300 | 74 | Glycerin | 26 | Per lite | 10 | Good | 352 | 2.3 |
| Experimental Example 1-15 | HEC (H200K) | 200,000 | 74 | Glycerin | 26 | Per lite | 10 | Good | 378 | 2.5 |
| Experimental Example 1-16 | HEC (H300) | 300 | 74 | Glycerin | 26 | Per lite | 60 | Good | 302 | 1.9 |
| Experimental Example 1-17 | HEC (H10) | 10 | 77 | Glycerin | 23 | Per lite | 30 | Good | 250 | 1.7 |
| Experimental Example 1-18 | HEC (B100K) | 100,000 | 77 | Glycerin | 23 | - | - | Good | 223 | 1.5 |
| Experimental Example 1-19 | HEC (HM500) | 500 | 77 | Glycerin | 23 | - | - | Good | 185 | 1.3 |
| Experimental Example 1-20 | HEC (H100K) | 100,000 | 74 | Glycerin | 26 | Per lite | 70 | Poor | Not measurable | Not measurable |
| Experimental Example 1-21 | HEC (H300) | 300 | 74 | Glycerin | 26 | Per lite | 90 | Poor | Not measurable | Not measurable |

(continued)

| Classif ication | Thermoplastic resin | | | | | Porous inorganic material | | Molda bility | Moist ure absor ption capac ity (g) | Avera ge moist ure relea se capac ity (g/h) |
|---|---|---|---|---|---|---|---|---|---|---|
| | Cellulose derivative | | | Glycerin | | Type | Con tent (g) | | | |
| | Type (Pro duct ) | Visc osit y (cps ) | Con ten t (g) | Type | Con ten t (g) | | | | | |
| Experim ental Ex- ample 1-22 | HEC (B10 0K) | 100, 000 | 90 | Glyc erin | 10 | Per lit e | 10 | Poor | Not measu rable | Not measu rable |
| Experim ental Example 1-23 | HEC (B4K ) | 4,00 0 | 85 | Glyc erin | 15 | Per lit e | 10 | Poor | Not measu rable | Not measu rable |
| Experim ental Example 1-24 | HEC (B10 0K) | 100, 000 | 74 | PEG 400 | 26 | Per lit e | 10 | Good | 180 | 1.3 |
| Experim ental Example 1-25 | HPMC (PMA 15M) | 150 | 74 | Glyc erin | 26 | Per lit e | 10 | Poor | Not measu rable | Not measu rable |
| Experim ental Example 1-26 | MC (MC4 0H) | 4, 00 0 | 74 | Glyc erin | 26 | Per lit e | 10 | Poor | Not measu rable | Not measu rable |
| Experim ental Example 1-27 | HEMC (EMA 40H) | 4, 00 0 | 74 | Glyc erin | 26 | Per lit e | 10 | Poor | Not measu rable | Not measu rable |
| Experim ental Example 1-28 | HEC (B10 0K) | 100, 000 | 100 | - | - | Per lit e | 10 | Poor | Not measu rable | Not measu rable |
| HEC: Hydroxyethyl cellulose<br>HPMC: Hydroxypropyl methylcellulose<br>MC: Methyl cellulose<br>HEMC: Hydroxyethyl methylcellulose<br>PEG 400: Polyethylene glycol 400 | | | | | | | | | | |

As shown in Table 1, the soil conditioners of Experimental Examples 1-1 to 1-19 exhibited good moldability and sufficient moisture absorption capacity as well as moisture release capacity. However, when the hydroxyethyl cellulose content was outside the range of 65% to 80%, the moldability of the soil conditioners was found to be poor. Additionally, when PEG was used as a plasticizer, the moldability was good, while both the moisture absorption capacity and moisture release capacity were found to be inferior. With the use of hydroxypropyl methylcellulose (HPMC), methylcellulose (MC), or hydroxyethyl methylcellulose (HEMC), the moldability was found to be poor.

**<Experimental Example 2-1>**

To 77 g of hydroxyethyl cellulose (HEC B100K, Lotte Fine Chemical) having a viscosity of 100,000 cps, 23 g of glycerin was added to obtain a mixture. 5 g of citric acid as a crosslinking agent was added therein, followed by high-speed mixing at a speed of 300 rpm for 30 minutes for plasticization. After plasticization, the resulting mixture was extruded using a twin-screw extruder with a screw speed of 30 rpm [main motor speed: 200 rpm to 250 rpm] at an average extruder temperature of 130°C to manufacture a soil conditioner in strand form (3 mm $\times$ 3 mm) .

**<Experimental Examples 2-2 to 2-14>**

Soil conditioners in strand form were manufactured in the same manner as in Experimental Example 2-1, except for varying the conditions as set forth in Table 2 below.

**<Experimental Example 2-15>**

To 74 g of hydroxyethyl cellulose (HEC H200K, Lotte Fine Chemical) having a viscosity of 200,000 cps, 26 g of glycerin was added to obtain a mixture. The resulting mixture was subjected to high-speed mixing at a speed of 300 rpm for 30 minutes for plasticization, and then extruded using a twin-screw extruder with a screw speed of 30 rpm [main motor speed: 200 rpm to 250 rpm] at an average extruder temperature of 150°C to obtain a thermoplastic resin. Citric acid as a crosslinking agent was added to the obtained thermoplastic resin in the amount specified in Table 2, followed by mixing for 20 minutes. The resulting mixture was then extruded again using a twin-screw extruder with a screw speed of 30 rpm (main motor speed: 200 rpm to 250 rpm) at an average extruder temperature of 130°C to manufacture a soil conditioner in strand form (3 mm × 3 mm).

**<Experimental Examples 2-16 and 2-17>**

Soil conditioners in strand form were manufactured in the same manner as in Experimental Example 2-15, except for varying the conditions as set forth in Table 2 below.

**<Experimental Examples 2-18 to 2-27>**

Soil conditioners in strand form were manufactured in the same manner as in Experimental Example 2-1, except for varying the conditions as set forth in Table 2 below.

**<Experimental Example 2-28>**

To 100 g of hydroxyethyl cellulose (HEC B100K, Lotte Fine Chemical) having a viscosity of 100,000 cps, 25 g of citric acid was added, followed by mixing for 20 minutes. The resulting mixture was then extruded using a twin-screw extruder with a screw speed of 30 rpm [main motor speed: 200 rpm to 250 rpm] at an average extruder temperature of 130°C to manufacture a soil conditioner in strand form (3 mm × 3 mm).

**[Measurement of Moldability, Moisture Absorption Capacity, and Moisture Release Capacity of Soil Conditioner]**

The properties of the soil conditioners manufactured in Experimental Examples 2-1 to 2-28 were measured by the following methods, and the results are shown in Table 2 below.

Measurement Methods

(1) Measurement of moldability: The flowability during discharge was visually evaluated immediately after discharging the extrudate. The moldability was evaluated as "good" when the extrudate was in good condition while facilitating the extrusion, or was evaluated as "poor" when the extrusion failed. The results are shown in Table 2.
(2) Measurement of moisture absorption capacity: 100 g of the soil conditioner specimens manufactured in the experimental examples were each placed in a plastic container and mixed with 1,500 mL of water. After 60 minutes, the amount of moisture absorbed by the soil conditioner was calculated using Equation 3. The results are shown in Table 2.

Moisture absorption capacity (g) = Weight of soil conditioner after moisture absorption (g) - [Weight of soil conditioner before moisture absorption (g) + Weight of plastic container (g)].....(3)        (3)

(3) Measurement of moisture release capacity: After moisture absorption, the soil conditioners were each allowed to stand under conditions: a temperature of 20°C, a relative humidity of 60%, and a duration of 180 hours (7 days). The amount of moisture released was measured using a balance at 12-hour intervals and then calculated using Equation 4. The results are shown in Table 2.

Moisture release capacity (g/h) = [Weight of soil conditioner after moisture absorption (g) - Weight of soil conditioner after moisture release (g)]/144 (h)....(4)    (4)

Table 2

| Classification | Thermoplastic resin | | | Porous inorgani c material | | | | Molda bilit y | Moist ure absor ption capac ity (g) | Avera ge moist ure relea se capac ity (g/h) |
|---|---|---|---|---|---|---|---|---|---|---|
| | Cellulose derivative | Glycerin | | Typ e | | | | | | |
| | Type (Pro duct ) | Visc osit y (cps ) | Con ten t (g) | Type | Con ten t (g) | | Con ten t (g) | | | |
| Experim ental Example 2-1 | HEC (B10 0K) | 100, 000 | 77 | Glyc erin | 23 | Cit ric aci d | 5 | Good | 245.2 | 1.7 |
| Experim ental Example 2-2 | HEC (B10 0K) | 100, 000 | 77 | Glyc erin | 23 | Cit ric aci d | 7 | Good | 278.0 | 1.8 |
| Experim ental Example 2-3 | HEC (B10 0K) | 100, 000 | 77 | Glyc erin | 23 | Cit ric aci d | 10 | Good | 350.8 | 2.3 |
| Experim ental Example 2-4 | HEC (B10 0K) | 100, 000 | 77 | Glyc erin | 23 | Cit ric aci d | 30 | Good | 430.3 | 2.8 |
| Experim ental Example 2-5 | HEC (B10 0K) | 100, 000 | 80 | Glyc erin | 20 | Cit ric aci d | 25 | Good | 427.6 | 2.9 |
| Experim ental Example 2-6 | HEC (B10 0K) | 100, 000 | 74 | Glyc erin | 26 | Cit ric aci d | 25 | Good | 409.0 | 2.7 |
| Experim ental Example 2-7 | HEC (B10 0K) | 100, 000 | 70 | Glyc erin | 30 | Cit ric aci d | 25 | Good | 416.0 | 2.8 |
| Experim ental Example 2-8 | HEC (B10 0K) | 100, 000 | 65 | Glyc erin | 35 | Cit ric aci d | 25 | Good | 359.3 | 2.4 |
| Experim ental Example 2-9 | HEC (HM5 00) | 4,00 0 | 77 | Glyc erin | 23 | Cit ric aci d | 25 | Good | 288.2 | 1.9 |

(continued)

| Classification | Thermoplastic resin | | | Porous inorganic material | | | | Moldability | Moisture absorption capacity (g) | Average moisture release capacity (g/h) |
|---|---|---|---|---|---|---|---|---|---|---|
| | Cellulose derivative | Glycerin | | Type | | | | | | |
| | Type (Product) | Viscosity (cps) | Content (g) | Type | Content (g) | | Content (g) | | | |
| Experimental Example 2-10 | HEC (B4K) | 4,000 | 74 | Glycerin | 26 | Citric acid | 25 | Good | 288.0 | 2.0 |
| Experimental Example 2-11 | HEC (H4K) | 30,000 | 74 | Glycerin | 26 | Citric acid | 25 | Good | 261.3 | 1.7 |
| Experimental Example 2-12 | HEC (B30K) | 30,000 | 74 | Glycerin | 26 | Citric acid | 25 | Good | 309.5 | 2.0 |
| Experimental Example 2-13 | HEC (H200K) | 200,000 | 74 | Glycerin | 26 | Citric acid | 25 | Good | 297.0 | 2.0 |
| Experimental Example 2-14 | HEC (H300) | 300 | 74 | Glycerin | 26 | Citric acid | 25 | Good | 277.2 | 1.8 |
| Experimental Example 2-15 | HEC (H200K) | 200,000 | 74 | Glycerin | 26 | Citric acid | 25 | Good | 448.3 | 2.9 |
| Experimental Example 2-16 | HEC (H300) | 300 | 74 | Glycerin | 26 | Citric acid | 25 | Good | 278.1 | 1.8 |
| Experimental Example 2-17 | HEC (B100K) | 100,000 | 74 | Glycerin | 26 | Citric acid | 40 | Good | 429.5 | 2.7 |
| Experimental Example 2-18 | HEC (H10) | 10 | 77 | Glycerin | 23 | Citric acid | 25 | Good | 236 | 1.6 |
| Experimental Example 2-19 | HEC (B100K) | 100,000 | 77 | Glycerin | 23 | - | - | Good | 223 | 1.5 |
| Experimental Example 2-20 | HEC (HM500) | 500 | 77 | Glycerin | 23 | - | - | Good | 185 | 1.3 |

(continued)

| Classification | Thermoplastic resin | | | Porous inorganic material | | | | Moldability | Moisture absorption capacity (g) | Average moisture release capacity (g/h) |
|---|---|---|---|---|---|---|---|---|---|---|
| | Cellulose derivative | Glycerin | | Type | | | | | | |
| | Type (Product) | Viscosity (cps) | Content (g) | Type | Content (g) | | Content (g) | | | |
| Experimental Example 2-21 | HEC (H300) | 300 | 74 | Glycerin | 26 | Citric acid | 50 | Poor | Not measurable | Not measurable |
| Experimental Example 2-22 | HEC (B100K) | 100,000 | 90 | Glycerin | 10 | Citric acid | 25 | Poor | Not measurable | Not measurable |
| Experimental Example 2-23 | HEC (B4K) | 4,000 | 85 | Glycerin | 15 | Citric acid | 25 | Poor | Not measurable | Not measurable |
| Experimental Example 2-24 | HEC (B100K) | 100,000 | 74 | PEG 400 | 26 | Citric acid | 25 | Good | 130 | 1.2 |
| Experimental Example 2-25 | HPMC (PMA 15M) | 150 | 74 | Glycerin | 26 | Citric acid | 25 | Poor | Not measurable | Not measurable |
| Experimental Example 2-26 | MC (MC40H) | 4,000 | 74 | Glycerin | 26 | Citric acid | 25 | Poor | Not measurable | Not measurable |
| Experimental Example 2-27 | HEMC (EMA 40H) | 4,000 | 74 | Glycerin | 26 | Citric acid | 25 | Poor | Not measurable | Not measurable |
| Experimental Example 2-28 | HEC (B100K) | 100,000 | 100 | - | - | Citric acid | 25 | Poor | Not measurable | Not measurable |

HEC: Hydroxyethyl cellulose

HPMC: Hydroxypropyl methylcellulose

MC: Methyl cellulose

HEMC: Hydroxyethyl methylcellulose

PEG 400: Polyethylene glycol 400

As shown in Table 2, the soil conditioners of Experimental Examples 2-1 to 2-20 exhibited good moldability and sufficient moisture absorption capacity as well as moisture release capacity. However, when the hydroxyethyl cellulose content was outside the range of 65% to 80%, the moldability was found to be poor. Additionally, when polyethylene glycol was used as a plasticizer, the moldability was good, while both the moisture absorption capacity and moisture release capacity were found to be inferior. With the use of hydroxypropyl methylcellulose (HPMC), methylcellulose (MC), or hydroxyethyl methylcellulose (HEMC), the moldability was found to be poor.

Therefore, it was confirmed that the soil conditioner according to the present disclosure can enhance the moisture retention ability of soil and, as it biodegrades, increase bio-carbon content, thereby contributing to the mitigation of global warming.

While the present disclosure has been shown and described with reference to experimental examples thereof, it will be understood by those skilled in the art that various changes in form and details may be made therein without departing from the spirit and scope of the present disclosure as defined by the appended claims and their equivalents.

**Claims**

1. An eco-friendly soil conditioner, comprising:
   a thermoplastic resin containing 65 wt% to 80 wt% of hydroxyethyl cellulose and 20 wt% to 35 wt% of glycerin.

2. The eco-friendly soil conditioner of claim 1, further comprising:

   5 to 60 parts by weight of a porous inorganic material based on 100 parts by weight of the thermoplastic resin; or
   5 to 40 parts by weight of a crosslinking agent based on 100 parts by weight of the thermoplastic resin.

3. The eco-friendly soil conditioner of claim 2, wherein the porous inorganic material is at least one selected from the group consisting of perlite, vermiculite, bentonite, and zeolite.

4. The eco-friendly soil conditioner of claim 2, wherein the crosslinking agent is at least one selected from the group consisting of citric acid, polyethylene glycol, and hexanediol.

5. The eco-friendly soil conditioner of claim 1, wherein the hydroxyethyl cellulose has a viscosity of 10 cps to 250,000 cps, as measured at a temperature of 20°C using a Brookfield viscometer for an aqueous solution in which 2 wt% of hydroxyethyl cellulose is dissolved in water.

6. A method for manufacturing an eco-friendly soil conditioner, the method comprising the steps of:

   (a) adding 20 wt% to 35 wt% of glycerin to 65 wt% to 80 wt% of hydroxyethyl cellulose to obtain a mixture;
   (b) subjecting the obtained mixture to kneading for plasticizationto obtain a thermoplastic resin; and
   (c) subjecting the obtained thermoplastic resin to granulation.

7. The method of claim 6, further comprising:
   further adding a porous inorganic material and/or a crosslinking agent to step (a) or step (c), wherein the porous inorganic material is added in an amount of 5 to 60 parts by weight based on 100 parts by weight of the mixture of step (a) or 100 parts by weight of the thermoplastic resin of step (c), and the crosslinking agent is added in an amount of 5 to 40 parts by weight based on 100 parts by weight of the mixture of step (a) or 100 parts by weight of the thermoplastic resin of step (c).

8. The method of claim 7, wherein the porous inorganic material is at least one selected from the group consisting of perlite, vermiculite, bentonite, and zeolite.

9. The method of claim 7, wherein the crosslinking agent is at least one selected from the group consisting of citric acid, polyethylene glycol, and hexanediol.

10. The method of claim 6, wherein the hydroxyethyl cellulose has a viscosity of 10 cps to 250,000 cps, as measured at a temperature of 20°C using a Brookfield viscometer for an aqueous solution in which 2 wt% of hydroxyethyl cellulose is dissolved in water.

11. The method of claim 6, wherein the kneading in step (b) is performed at a temperature of 50°C to 90°C at a speed of equal to or greater than 300 rpm.

12. The method of claim 6, wherein the granulation in step (c) is performed by compression-molding the thermoplastic resin into a granular or pellet form.

Fig.1

Fig.2

## INTERNATIONAL SEARCH REPORT

| International application No. |
|---|
| **PCT/KR2024/006313** |

| A. | CLASSIFICATION OF SUBJECT MATTER |
|---|---|

**C09K 17/32**(2006.01)i; **C09K 17/50**(2006.01)i; C09K 101/00(2006.01)n

According to International Patent Classification (IPC) or to both national classification and IPC

| B. | FIELDS SEARCHED |
|---|---|

Minimum documentation searched (classification system followed by classification symbols)

C09K 17/32(2006.01); A01G 24/35(2018.01); A23L 29/262(2016.01); A61K 31/765(2006.01); A61K 8/73(2006.01); A61Q 5/12(2006.01); C08F 20/06(2006.01); C08J 5/18(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 하이드록시에틸 셀룰로오스(hydroxyethyl cellulose), 글리세린(glycerin), 친환경 (eco-friendly), 토양 개량제(soil conditioner), 가교제(cross-linking agent), 다공성 무기 재료(porous inorganic material)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0353665 A1 (GELESIS LLC) 18 November 2021 (2021-11-18)<br>See paragraphs [0005], [0020], [0034], [0036], [0045], [0067] and [0090]. | 1-12 |
| A | US 2023-0071674 A1 (LG CHEMICAL, LTD.) 09 March 2023 (2023-03-09)<br>See entire document. | 1-12 |
| A | KR 10-2019-0120219 A (SUMITOMO SEIKA CHEMICALS CO., LTD.) 23 October 2019 (2019-10-23)<br>See entire document. | 1-12 |
| A | KR 10-2023-0063856 A (SKC CO., LTD.) 09 May 2023 (2023-05-09)<br>See entire document. | 1-12 |
| A | KR 10-2015-0010981 A (HERCULES LLC) 29 January 2015 (2015-01-29)<br>See entire document. | 1-12 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 August 2024** | **16 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 711 435 A1

## INTERNATIONAL SEARCH REPORT
### Information on patent family members

International application No.

**PCT/KR2024/006313**

| Patent document cited in search report | | | Publication date (day/month/year) | Patent family member(s) | | | Publication date (day/month/year) |
|---|---|---|---|---|---|---|---|
| US | 2021-0353665 | A1 | 18 November 2021 | CN | 101796075 | A | 04 August 2010 |
| | | | | CN | 101796075 | B | 07 May 2014 |
| | | | | CN | 104327191 | A | 04 February 2015 |
| | | | | EP | 2178922 | A2 | 28 April 2010 |
| | | | | EP | 2178922 | B1 | 07 October 2015 |
| | | | | EP | 2463308 | A1 | 13 June 2012 |
| | | | | EP | 2463308 | B1 | 03 December 2014 |
| | | | | EP | 2514444 | A1 | 24 October 2012 |
| | | | | EP | 2532685 | A1 | 12 December 2012 |
| | | | | EP | 2532685 | B1 | 03 December 2014 |
| | | | | EP | 2535359 | A1 | 19 December 2012 |
| | | | | JP | 2010-535911 | A | 25 November 2010 |
| | | | | JP | 2014-065717 | A | 17 April 2014 |
| | | | | JP | 2015-212388 | A | 26 November 2015 |
| | | | | JP | 2018-040002 | A | 15 March 2018 |
| | | | | JP | 2020-097741 | A | 25 June 2020 |
| | | | | JP | 5485151 | B2 | 07 May 2014 |
| | | | | JP | 5760069 | B2 | 05 August 2015 |
| | | | | JP | 7027083 | B2 | 01 March 2022 |
| | | | | US | 10086014 | B2 | 02 October 2018 |
| | | | | US | 2010-0234233 | A1 | 16 September 2010 |
| | | | | US | 2014-0296507 | A1 | 02 October 2014 |
| | | | | US | 2016-0361350 | A1 | 15 December 2016 |
| | | | | US | 2020-0046755 | A1 | 13 February 2020 |
| | | | | US | 8658147 | B2 | 25 February 2014 |
| | | | | WO | 2009-021701 | A2 | 19 February 2009 |
| US | 2023-0071674 | A1 | 09 March 2023 | CN | 114945624 | A | 26 August 2022 |
| | | | | EP | 4074764 | A1 | 19 October 2022 |
| | | | | EP | 4074764 | A4 | 21 June 2023 |
| | | | | KR | 10-2021-0118762 | A | 01 October 2021 |
| | | | | WO | 2021-194203 | A1 | 30 September 2021 |
| KR | 10-2019-0120219 | A | 23 October 2019 | CN | 110325558 | A | 11 October 2019 |
| | | | | EP | 3590978 | A1 | 08 January 2020 |
| | | | | EP | 3590978 | A4 | 25 November 2020 |
| | | | | EP | 3590978 | B1 | 30 August 2023 |
| | | | | JP | 7288399 | B2 | 07 June 2023 |
| | | | | US | 2020-0115476 | A1 | 16 April 2020 |
| | | | | WO | 2018-159801 | A1 | 07 September 2018 |
| KR | 10-2023-0063856 | A | 09 May 2023 | WO | 2023-080496 | A1 | 11 May 2023 |
| KR | 10-2015-0010981 | A | 29 January 2015 | CN | 101663021 | A | 03 March 2010 |
| | | | | CN | 101663021 | B | 20 January 2016 |
| | | | | EP | 2101722 | A1 | 23 September 2009 |
| | | | | EP | 2101722 | B1 | 08 July 2015 |
| | | | | JP | 2010-515735 | A | 13 May 2010 |
| | | | | JP | 5622396 | B2 | 12 November 2014 |
| | | | | KR | 10-1494021 | B1 | 16 February 2015 |
| | | | | KR | 10-2009-0108704 | A | 16 October 2009 |
| | | | | US | 2008-0166311 | A1 | 10 July 2008 |
| | | | | US | 8728448 | B2 | 20 May 2014 |
| | | | | WO | 2008-086023 | A1 | 17 July 2008 |

Form PCT/ISA/210 (patent family annex) (July 2022)

## INTERNATIONAL SEARCH REPORT
**Information on patent family members**

International application No.

**PCT/KR2024/006313**

| Patent document cited in search report | Publication date (day/month/year) | Patent family member(s) | Publication date (day/month/year) |
|---|---|---|---|
| | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101264829

- KR 102479792